(19) Europäisches Patentamt
European Patent Office
Office européen des brevets

(11) Publication number : **0 411 750 B1**

# (12) EUROPEAN PATENT SPECIFICATION

(45) Date of publication of patent specification : **04.05.94 Bulletin 94/18**

(51) Int. Cl.$^5$ : **A01N 43/80,** A01N 25/22

(21) Application number : **90305907.9**

(22) Date of filing : **31.05.90**

## (54) Organic stabilizers for isothiazolones.

(30) Priority : **06.06.89 US 362624**
**17.05.90 US 525261**

(43) Date of publication of application : **06.02.91 Bulletin 91/06**

(45) Publication of the grant of the patent : **04.05.94 Bulletin 94/18**

(84) Designated Contracting States : **AT BE CH DE DK ES FR GB GR IT LI LU NL SE**

(56) References cited :
**EP-A- 0 315 464**
**GB-A- 2 058 570**
**GB-A- 2 185 995**

(73) Proprietor : **ROHM AND HAAS COMPANY**
**Independence Mall West**
**Philadelphia Pennsylvania 19105 (US)**

(72) Inventor : **Mattox, John Robert**
**Rural Route 2, Box 132 Cedar Lane**
**Perkasie, Pennsylvania 18944 (US)**

(74) Representative : **Angell, David Whilton et al**
**ROHM AND HAAS (UK) LTD. European Operations Patent Department Lennig House**
**2 Mason's Avenue**
**Croydon, Surrey, CR9 3NB (GB)**

EP 0 411 750 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to stabilization of isothiazolone microbicides.

It is known that 2-substituted 3-isothiazolones are extremely efficacious microbicides, having a number of industrial uses as summarized herein, but that they are unstable to a variety of conditions, especially long storage, exposure to higher temperatures, exposure to high pH, and the like. Although the stability varies from compound to compound, the problem is of importance to the commercial development and use of many isothiazolones.

Metal nitrate stabilizers for isothiazolones have been commonly employed, see especially US-A-3,870,795.

Japanese Patent 12243/83 discloses stabilizing a mixture of an isothiazolone and 2-hydroxymethyl-2-nitro-1,3-propanediol with a diol solvent. However, 2-hydroxymethyl-2-nitro-1,3-propanediol is a formaldehyde releaser, which is known to stabilize isothiazolones (see US-A-4,165,318 and 4,129,448).

US-A-4,824,957 discloses stabilizing isothiazolones in non-aqueous, salt-free systems by several hydroxylic solvents, outstanding among them dipropylene glycol.

US-A-4,624,679 teaches stabilization of antimicrobial compounds when processed into plastics at elevated temperatures by any of a large number of known antioxidants. n-Octylisothiazolone is disclosed but not exemplified. Combinations of antimicrobial preservatives, including isothiazolones, are shown to have better stability (Favet et al, Pharm. Acta. Helv. 61, 15 (1986)). Also taught are combinations of some of these biocides with antioxidants (Zeelie et al., Cosmet. Toiletries, 98, 98, 51 (1983)).

Combinations of thiazolidines (having a saturated five-membered ring with adjacent sulfur and nitrogen atoms) with nitroalkanes are taught in U.S. patent 4,424,386 in combination with certain organic compounds, including epoxides, in inhibition of metal corrosion in degreasing of aluminum. There is no suggestion of stabilization of the thiazolidine, per se, and no reference to the present unsaturated isothiazolones. The following references are also noted as showing stabilization of certain classes of biologically active compounds, but not isothiazolones:

US-A-3,438,137 teaches stabilization of amitraz, a substituted triazapentadiene, against loss of activity on storage with a carbodiimide. US-A-4,049,822 teaches stabilization of phenoxarsines with glycyl phosphites or glycyl phosphonates. A series of patents to Burk *et al.* teaches stabilization of halogenated amide antimicrobials, such as 2,2-dibromonitrilopropionamide, usually in the presence of some water, with a variety of organic stabilizers. US-A-4,163,795 teaches azine or nitrile stabilizers; US-A- 4,190,668 teaches cyclic ethers; US-A-4,163,796 teaches quaternary ammonium or phosphonium salts; US-A- 4,163,797 teaches carbamoyl or sulfamoyl stabilizers; U.S. 4,163,798 teaches aldehydes; US-A-4,241,080 teaches acids or anhydrides. There is no suggestion that any of these stabilizers would be useful in the neat or non-aqueous stabilization of isothiazolones. DE-A-1,770,976 teaches stabilization of 3,4-dichloro-5-substituted isothiazoles with solvent complexes; dimethyl formamide and dimethyl acetamide are illustrated.

EP-A-315464 discloses the use of orthoesters such as trimethyl or triethyl orthoformate as stabilizers for 3-isothiazalones.

Thus, until very recently means for stabilization of isothiazolones against thermal degradation or storage degradation has generally been by metal salts, formaldehyde, or formaldehyde releasers. Both formaldehyde or formaldehyde-releasers and salt stabilization of isothiazolones have some drawbacks. Formaldehyde is a suspected carcinogen, and it is desirable not to use formaldehyde in applications where contact with human skin or lungs may occur.

More generally, in certain applications it is desirable to avoid addition of some organic stabilizers due to their volatility, decomposition at high temperatures, high cost, difficulty in handling, or potential toxicity. Thus there is a need for further organic stabilizers which do not have such drawbacks.

It is therefore desired to provide an isothiazolone stabilization system which avoids the use or release of nitrates or formaldehyde. A further desideratum is to substantially eliminate water and salt neutralization in stabilizing isothiazolones.

Accordingly the present invention which comprises in one aspect a composition provides one or more 3-isothiazolones of the formula (I)

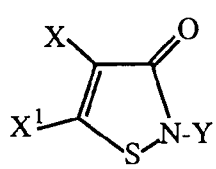

wherein Y is a ($C_1$-$C_{18}$)alkyl or ($C_3$-$C_{12}$), preferably ($C_5$-$C_8$), cycloalkyl each optionally substituted with one or more of hydroxy, halo, cyano, alkylamino, dialkylamine, arylamino, carboxy, carbalkoxy, alkoxy, aryloxy, alkylthio, haloalkoxy, cycloalkylamino, carbamoxy, or isothiazolonyl; an unsubstituted or halo-substituted ($C_2$-$C_8$), preferably ($C_2$-$C_4$) alkenyl or alkynyl; a ($C_7$-$C_{10}$)aralkyl optionally substituted with one or more of halogen, ($C_1$-$C_4$)alkyl or ($C_1$-$C_4$)alkoxy; or an aryl optionally substituted with one or more of halogen, nitro, ($C_1$-$C_4$)alkyl, ($C_1$-$C_4$)alkyl-acylamino, carb($C_1$-$C_4$)alkoxy or sulfamyl; and X and $X_1$ is each independently hydrogen, halo or alkyl; and of one or more of the following compounds:

i. dialkyl and dicycloalkylcarbodiimides of the formula

$$R^2\text{-}N{=}C{=}NR^2$$

In another aspect the invention provides a method of stabilizing isothiazolones, comprising incorporating an effective amount of one or more of said compounds therewith;

and in a futher aspect it provides a method for preventing or inhibiting the growth of bacteria, fungi, or algae in a locus subject or susceptible to contamination thereby, which comprises incorporating onto or into the locus, in an amount which is effective to adversely affect the growth of bacteria, fungi, or algae, a composition as defined above.

The isothiazolones which are stabilized include those disclosed in US-A- Nos. 3,523,121 and 3,761,488.

Representative Y substituents include methyl, ethyl, propyl, isopropyl, butyl, hexyl, octyl, cyclohexyl, benzyl, 3,4-dichlorobenzyl, 4-methoxybenzyl, 4-chlorobenzyl, 3,4-dichlorophenyl, 4-methoxyphenyl, hydroxymethyl, chloromethyl, chloropropyl, phenethyl, 4-chlorophenyl, 2-(4-chlorophenyl)ethyl and the like.

Preferred isothiazolones are 5-chloro-2-methyl-3-isothiazolone, 2-methyl-3-isothiazolone, 2-octyl-3-isothiazolone, 4,5-dichloro-2-cyclohexyl-3-isothiazolone and 4,5-dichloro-2-octyl-3-isothiazolone.

This invention provides stable microbicidal isothiazolone compositions in which (1) water may be substantially eliminated, (2) salt neutralization may be eliminated and (3) the need for nitrate stabilizer salts may be substantially eliminated.

Preferred stabilizers include dicyclohexylcarbodiimide

$$(R^1{=}R^2{=}\text{Cyclo-}C_6H_{11}).$$

More preferably, this invention comprises at least one isothiazolone (I, supra) wherein Y is ($C_1$-$C_{18}$)alkyl or ($C_3$-$C_{12}$)cycloalkyl; X is hydrogen or halo; and $X^1$ is hydrogen or halo. Typical formulation ranges are illustrated in the following Table (all percentages are parts by weight) for both a concentrated solution of the isothiazolone and a dilute solution. For certain uses, such as shipping of large quantities, more concentrated solutions may also be utilized.

FORMULATIONS TABLE

| Isothiazolone (I, Supra) | Stabilizer | Solvent |
|---|---|---|
| 0.1 - 99.9% | 0.1% - 99.9% | 0 - 99.8% |
| | Preferred | |
| 1 - 50% | 1 - 25% | 25 - 98% |
| | More Preferred | |
| 1 - 25% | 1 - 10% | 65 - 98% |

When it is desired to package the isothiazolone with only the stabilizer and no other organic solvent or water present the amount of stabilizer or mixture of stabilizers employed will be from about 1 percent to about 25 percent. The isothiazolone may be present in a bulk form or packaged or encapsulated in some manner, including a form for controlled release. The ratio of stabilizer to isothiazolone is preferably from about 1:7 to about 1.5:1.

Solvents other than the stabilizing chemicals may be used to dissolve the isothiazolones and may be any organic solvent which dissolves the isothiazolones, is compatible with the proposed end use, do not destabilize the isothiazolone, and do not react with the stabilizer to eliminate its stabilizing action.

Hydroxylic solvents, for example, polyols, such as glycols, alcohols and the like, may be used. Under conditions of high dilution and high ratios of stabilizer to isothiazolone, glycols may be successfully used.

Preferred solvents are capped polyols, wherein the free hydroxyl is replaced with an ether or ester function.

Especially preferred are 2,5,8,11-tetraoxadecane, commonly known as triethylene glycol dimethyl ether, and 4,7-dioxaundecanol-1 acetate, commonly known as diethylene glycol butyl ether acetate.

The amounts of stabilizer employed will vary depending on use conditions and concentrations of the isothiazolone in the mixture. In more concentrated solutions, effective amounts of stabilizer based on isothiazolone are in the ratios of from about 1:4 to about 1:2. Obviously higher amounts may be used, but at additional cost. At high levels of dilution of the isothiazolone (such as from 1 to 2 percent isothiazolone in the solvent), the ratio of stabilizer to isothiazolone can range from about 1:7 to about 2:1.

This invention permits the stabilization of isothiazolones so that the previously necessary stabilization salts can be substantially reduced and even eliminated. Useful stabilization salts which may nevertheless be employed are those disclosed in US-A-3,870,795 and 4,067,878 and include stabilization salts selected from:

1) Metal nitrates, where the metal is barium, cadmium, calcium, chromium, cobalt, copper, iron, lead, lithium, magnesium, manganese, mercury, nickel, sodium, silver, strontium, tin, zinc and the like; and

2) Copper (2+) salts where the anion is halide, sulfate, nitrate, nitrite, acetate, chlorate, perchlorate, bisulfate, bicarbonate, oxalate, maleate, carbonate, or phosphate and the like.

Uses of these new organically stabilized microbicides are typically at any locus subject to contamination by bacteria, fungi or algae. Typically loci are in aqueous systems such as water cooling, laundry wash water, oil systems such as cutting oils, oil fields and the like where microorganisms need to be killed or where their growth needs to be controlled.

The stabilized microbicidal compositions of this invention are advantageous over salt stabilized isothiazolones described in the art and are the microbicides of choice where salts pose a problem. For example, certain emulsions upon the addition of a salt may coagulate. The compositions of this invention avoid this problem and therefore can be used in emulsions such as photographic emulsions, coating emulsions, (e.g. paints) to form solid protective or decorative films; electronic circuitry, wood, metals, plastics, fibers, membranes, carpet backings, ceramics and the like where surfaces need to be coated or protected, adhesives, caulks, and sensitive emulsions.

In many salt stabilized microbicide systems of the prior art there is a potential for solids formation caused by interactions with other salts in the system, interaction with certain salt forming organics, by the conversion to organic salts, or simply by incompatibility with the system. The stabilized compositions of this invention would be preferred in those systems. Also, the compositions of this invention are useful in fuel systems such as diesel fuel, gasoline, kerosene, certain alcohols, and the like, because they eliminate the possibility of salt deposits on component parts. Another reason for eliminating salts is to avoid an environment in which corrosion can occur. For example, chloride salts (among others) have a corrosive effect on many metals and are to be avoided where possible. In water treatment systems where low cation and anion levels are important, this is especially true. Those familiar with the art in various areas where biological growth needs to be controlled will quickly recognize those applications where significant reduction of or elimination of salts will be desired. In many cases it is necessary to eliminate interactions between the stabilizing salts and other components of the system or formulation components which otherwise could reduce the performance or value of such systems.

It is also recognized that the isothiazolone stabilizers of this invention have other applications known to those skilled in the art. For example, carbodiimides are known to serve as reactive scavengers for molecules containing -OH, $-NH_2$, -SH and other nucleophilic groups. A microbicidal formulation stabilized with a carbodiimide would be particularly advantageous where the dual function of microbicidal/biostatic activity and scavenging would lead to advantageous results.

Potential areas of general application include disinfectants, sanitizers, cleaners, deodorizers, liquid and powder soaps, skin removers, oil and grease removers, food processing chemicals, dairy chemicals, food preservatives, animal food preservatives, wood preservation, paint, lazures, stains, mildewcides, hospital and medical antiseptics, metal working fluids, cooling water, air washers, petroleum production, paper treatment, paper mill slimicides, petroleum products, adhesives, textiles, pigment slurries, latexes, leather and hide treatment, petroleum fuel, laundry sanitizers, agricultural formulations, inks, mining, nonwoven fabrics, petroleum storage, rubber, sugar processing, tobacco, swimming pools, cosmetics, toiletries, pharmaceuticals, chemical toilets, household laundry products, diesel fuel additives, waxes and polishes and many other applications where water and organic materials come in contact under conditions which allow the growth of undesired microorganisms.

In the stabilization of plastic articles, it is also desirable to eliminate salts in the isothiazolones, as salts may contribute to deterioration of optical properties and/or increase water pickup and haze levels.

In some cosmetic formulations, it is also important to have low water and salt content. Eliminating nitrate salts avoids the possibility of nitrosamine formation with any amines present in the formulation. Removal of multivalent cations from the biocide may also eliminate the known possibility of creating physical incompatibility problems in certain cosmetic formulations caused by precipitation of salts or complexes.

It is known in the art that the performance of microbicides can frequently be enhanced by combination with one or more other microbicides. In fact, there have been numerous examples of synergistic combinations. Thus, other known microbicides may be combined advantageously with the stabilized isothiazolones of this invention.

Isothiazolones are used as disinfectants, in oil field water treatment, as watercooling system microbicides, as preservatives for aqueous dispersions or organic polymers, as wood pulp white water slimicides, as cosmetic preservatives, as cutting oil, jet fuel, and heating oil preservatives, and the like. Solutions of isothiazolones are also applied to a solid substrate, such as fabric, leather, or wood, as a preservative, or admixed with plastics.

The products of this invention are especially useful as preservatives for the following:

1. Cosmetics, as their use eliminates or substantially reduces the presence of nitrates, which under certain conditions in the presence of amines or amine precursors may lead to the formation of nitrosoamines.
2. Oils and fuels, since added salts and moisture are eliminated or minimized thus preventing potential corrosion, deposition or sludge formation.
3. Emulsions and dispersions that are sensitive to divalent cations; they occur in a wide variety of products, such as paints, cosmetics, floor polishes and binders.
4. Plastics, as they occur eliminates or substantially reduces precipitated salts which can contribute directly or indirectly to haze, opacity, or physical weakness in the surface.
5. Metal working fluids, which are a particularly important area of application for isothiazolone microbicides.

Metal working fluids are proprietary combinations of chemicals, which may contain such ingredients as are listed, but are not limited to such: alkanolamines, petroleum sulfonate surfactants, oils (naphthenic, paraffinic, etc.), chlorinated paraffins and fatty esters, sulfurized fatty compounds, phosphate esters, fatty acids and their amine salts, glycols, polyglycols, boric acid esters and amides. They are utilized in the milling, machining, drilling, and other processing technologies for fabricating metal for the purposes of lubricating, cooling, preventing surface corrosion, and the like. Because metal working fluids are recycled and stored, the growth of microorganisms is favored. Isothiazolones have been found effective in preventing the growth of such organisms. Certain of the components in the metal working fluids will tend to destroy the isothiazolone and so remove its biocidal protective activity, so that stabilizers for the isothiazolone against such degradation are desirable.

The following examples will further illustrate this invention, but are not intended to limit it in any way. All parts and percentages are by weight and all temperatures in degrees Centigrade, unless otherwise stated. Methods for quantitative determination of the isothiazolones in the following examples in metal-working fluids are described in detail in "Kathon 886 MW Microbiocide and Kathon 893 MW Fungicide: Analysis in Metalworking Fluids by High-Performance Liquid Chromatography", 1988, Rohm and Haas Company.

EXAMPLE 1

For comparison of the stabilization of the compositions of this invention with known materials the following tests were employed: using a thermally-controlled solid metal block with bored holes as receptacles for the vials and with demonstrated temperature control, vials of stabilizer, solvent, and isothiazolone were made up and heated for fixed periods of time. The percentage of the starting isothiazolone remaining was determined by high performance liquid chromatography (HPLC). Temperatures of 40°C, 55°C, and 70°C were used. These accelerated test conditions are much more severe than actual use conditions (i.e. room temperature). However, they provide a good indication of which stabilizer candidates would be acceptable under actual use conditions. Results were considered indicative of acceptable stability when remainder values indicated essentially no loss during the time specified for the isothiazolone or isothiazolone mixture studied.

<u>I. Stability Test for 5-Chloro-2-methylisothiazolone/2-Methylisothiazolone</u>

The 3:1 mixture of 5-chloro-2-methylisothiazolone/2-methylisothiazolone (16.2%) is mixed at 14% active ingredient (AI) in triethyleneglycol dimethylether (76.8%) with the chosen stabilizer (7%). The retention of AI is measured after four weeks at 40°C and after one and two weeks at 70°C. HPLC is used to measure AI. Maintenance of AI must be >85% to meet the target of most preferred. Other stabilizers may be less effective in the test, but may be adequate for stabilization under shorter time, less exacerbated conditions if they have percent retention values better than control in one or more of the three tests shown in Table 1.. This is compared with a 3:1 mixture of 5-chloro-2-methylisothiazolone/2-methylisothiazolone stabilized with magnesium nitrate (15%), where greater than 85% retention occurs in all three tests.

The results shown in Table I were obtained; P indicates that more than 85% of AI was retained, F indicates that less than 10% of AI was retained. The percent retention of 5-chloro-2-methyl-3-isothiazolone is reported since it is more sensitive to degradation than 2-methyl-3-isothiazolone.

TABLE 1

| Stabilizer | 1 week, 70°C | 2 weeks, 70°C | 4 weeks, 40°C |
|---|---|---|---|
| None | F | F | 32 |
| $Mg(NO_3)_2$, 15% (salt stabilizer - comparative) | P | P | P |
| Dicyclohexylcarbodiimide | P | P | P |
| Comparative | | | |
| Diethylacetal of propionaldehyde | 0 | 0 | 0 |
| Diethylacetal of phenylglyoxal | 5 | 0 | 0 |
| Dimethylacetal of chloroacetaldehyde | 0 | 0 | 0 |
| Dimethylketal of acetone | 5 | 0 | 0 |

## Claims

1. A composition comprising:

   a) from 1 to 50, preferably from 1 to 25 parts of one or more isothiazolones of the formula:

   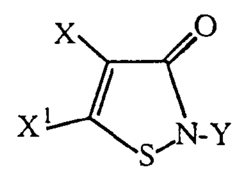

   wherein Y is a $(C_1\text{-}C_{18})$alkyl or $(C_3\text{-}C_{12})$, preferably $(C_5\text{-}C_8)$, cycloalkyl each optionally substituted with one or more of hydroxy, halo, cyano, alkylamino, dialkylamine, arylamino, carboxy, carbalkoxy, alkoxy, aryloxy, alkylthio, haloalkoxy, cycloalkylamino, carbamoxy, or isothiazolonyl; an unsubstituted or halo-substituted $(C_2\text{-}C_8)$, preferably $(C_2\text{-}C_4)$ alkenyl or alkynyl; a $(C_7\text{-}C_{10})$aralkyl optionally substituted with one or more of halogen, $(C_1\text{-}C_4)$alkyl or $(C_1\text{-}C_4)$alkoxy; or an aryl optionally substituted with one or more of halogen, nitro, $(C_1\text{-}C_4)$alkyl, $(C_1\text{-}C_4)$alkyl-acylamino, carb$(C_1\text{-}C_4)$alkoxy or sulfamyl; and X and $X^1$ are each independently hydrogen, halo or alkyl;

   b) from 1 to 25, preferably from 1 to 10 parts of one or more of dialkyl and dicycloalkylcarbodiimides of the formula

   $$R^1\text{-}N{=}C{=}NR^2$$

   and from 25 to 98, preferably from 65 to 98 parts of a solvent.

2. Method of stabilising an isothiazolone of the formula

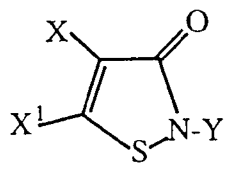

as defined in claim 1, comprising incorporating therewith one or more compounds of the formula $R^1$-N=C=N-$R^2$ as defined in claim 1, wherein the ratio of isothiazolone to stabilizer is from 1:10 to 50:1.

3. Method or composition according to any preceding claim wherein Y is ($C_1$-$C_{18}$)alkyl; X is hydrogen or halo, $X^1$ is hydrogen or halo, and $R^1$ and $R^2$ are alkyl or cycloalkyl.

4. Method or composition according to any preceding claim wherein the isothiazolone comprises 5-chloro-2-methyl-3-isothiazolone, 2-methyl-3-isothiazolone, 2-octyl-3-isothiazolone, and/or 4,5-dichloro-2-octyl-3-isothiazolone.

5. Method or composition according to any preceding claim wherein the amount of isothiazolone present is 14 parts, preferably 1.5 parts.

6. Method or composition according to any preceding claim wherein the compound of the formula $R^1$-N=C=N-$R^2$ is dicyclohexylcarbodiimide.

7. Method or composition according to any preceding claim wherein the ratio of stabilizer to isothiazolone is from 1:7 to 2:1.

8. A method of preventing or inhibiting the growth of bacteria, fungi, or algae in a locus susceptible or subject to contamination thereby, comprising incorporating onto or into the locus, in an amount which is effective to adversely affect the growth of bacteria, fungi, or algae, a composition according to any of claims 1 and 3 to 7.

9. Method according to claim 8 wherein the locus is an aqueous medium, a cutting oil formulation, a water-cooling system, a solid protective or decorative film, fabric, leather, paper, wood, laundry wash water, a cosmetic formulation, a fuel system, plastic or an emulsion.

## Patentansprüche

1. Zusammensetzung enthaltend
a) von 1-50 Teile, vorzugsweise von 1-25 Teile, eines oder mehrerer Isothiazolone der Formel

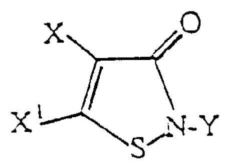

in der Y eine ($C_1$-$C_{18}$)-Alkylgruppe oder ($C_3$-$C_{12}$)-, vorzugsweise ($C_5$-$C_8$)-Cycloalkylgruppe, jeweils gegebenenfalls substituiert mit einem oder mehreren von Hydroxy, Halogen, Cyano, Alkylamino, Dialkylamin, Arylamino, Carboxy, Carbalkoxy, Alkoxy, Aryloxy, Alkylthio, Haloalkoxy, Cycloalkylamino, Carbamoxy oder Isothiazolonyl, eine nichtsubstituierte oder mit Halogen substituierte ($C_2$-$C_8$)-, vorzugsweise ($C_2$-$C_4$)-Alkenyl- oder Alkynylgruppe, eine ($C_7$-$C_{10}$) -Aralkylgruppe, gegebenenfalls substituiert mit einem oder mehreren von Halogen, ($C_1$-$C_4$)-Alkyl oder ($C_1$-$C_4$)-Alkoxy, oder eine Arylgruppe, gegebenenfalls substituiert mit einem oder mehreren von Halogen, Nitro, ($C_1$-$C_4$)-Alkyl, ($C_1$-$C_4$)-Alkylacylamino, Carb($C_1$-$C_4$)-Alkoxy oder Sulfamyl ist und X und $X_1$ jeweils unabhängig Wasserstoff, Halogen oder Alkyl sind,
b) von 1-25 Teile, vorzugsweise von 1-10 Teile, eines oder mehrerer Dialkyl- und Dicycloalkylcarbodiimide der Formel $R^1$-N=C=N$R^2$ und von 25-98 Teile, vorzugsweise 65-98 Teile, eines Lösemittels.

2. Verfahren zum Stabilisieren eines Isothiazolons der Formel

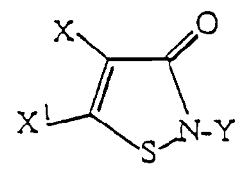

wie in Anspruch 1 angegeben, durch Einbringen einer oder mehrerer Verbindungen der Formel $R^1$-N=C=N-$R^2$, wie in Anspruch 1 angegeben, wobei das Verhältnis von Isothiazolon:Stabilisator von 1:10 bis 50:1 beträgt.

3. Verfahren oder Zusammensetzung nach einem der vorstehenden Ansprüche,
**dadurch gekennzeichnet,**
daß Y ($C_1$-$C_{18}$)-Alkyl, X Wasserstoff oder Halogen, $X^1$ Wasserstoff oder Halogen und $R^1$ und $R^2$ Alkyl oder Cycloalkyl sind.

4. Verfahren oder Zusammensetzung nach einem der vorstehenden Ãnsprüche,
**dadurch gekennzeichnet,**
daß das Isothiazolon 5-Chlor-2-methyl-3-isothiazolon, 2-Methyl-3-isothiazolon, 2-Octyl-3-isothiazolon und/oder 4,5-Dichlor-2-octyl-3-isothiazolon enthält.

5. Verfahren oder Zusammensetzung nach einem der vorstehenden Ansprüche,
**dadurch gekennzeichnet,**
daß Isothiazolon in einer Menge von 14 Teilen, vorzugsweise 1,5 Teilen, vorhanden ist.

6. Verfahren oder Zusammensetzung nach einem der vorstehenden Ansprüche,
**dadurch gekennzeichnet,**
daß die Verbindung der Formel $R^1$-N=C=N-$R^2$ Dicyclohexylcarbodiimid ist.

7. Verfahren oder Zusammensetzung nach einem der vorstehenden Anpsrüche,
**dadurch gekennzeichnet,**
daß das Verhältnis von Stabilisator:Isothiazolon von 1:7 bis 2:1 beträgt.

8. Verfahren zum Verhindern oder Hemmen des Wachstums von Bakterien, Pilzen oder Algen an einem Ort, der empfindlich ist für Verunreinigung damit oder der damit verunreinigt ist durch Einbringen in oder Aufbringen auf den Ort einer Zusammensetzung nach einem der Ansprüche 1 und 3-7 in einer Menge, die wirksam ist, das Wachstum von Bakterien, Pilzen oder Algen gegenteilig zu beeinflussen.

9. Verfahren nach Anspruch 8,
**dadurch gekennzeichnet,**
daß der Ort ein wäßriges Medium, eine Schneidölformulierung, ein Wasserkühlsystem, ein fester Schutzfilm oder Dekorfilm, Gewebe, Leder, Papier, Holz, Wäschereiwaschwasser, eine kosmetische Formulierung, ein Brennstoffsystem, Kunststoff oder eine Emulsion ist.

## Revendications

1. Composition, comprenant :
   a) de 1 à 50, de préférence de 1 à 25, parties d'une ou plusieurs isothiazolones de formule :

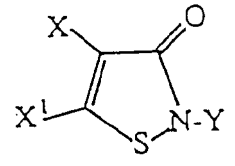

dans laquelle Y est un groupe alkyle en $C_1$-$C_{18}$ ou cycloalkyle en $C_3$-$C_{12}$, de préférence en $C_5$-$C_8$, chacun éventuellement substitué par un ou plusieurs groupes hydroxy, halogéno, cyano, alkylamino, dialkylamine, arylamino, carboxy, carbalcoxy, alcoxy, aryloxy, alkylthio, halogénoalcoxy, cycloalkylamino, carbamoxy ou isothiazolonyle; un groupe alcényle ou alcynyle en $C_2$-$C_8$, de préférence en $C_2$-$C_4$, non substitué ou substitué par un halogène; un groupe arylalkyle en $C_7$-$C_{10}$, éventuellement substitué par un ou plusieurs groupes halogéno, alkyle en $C_1$-$C_4$ ou alcoxy en $C_1$-$C_4$; ou un groupe aryle, éventuellement substitué par un ou plusieurs groupes halogéno, nitro, alkyle en $C_1$-$C_4$, alkyl(en $C_1$-$C_4$)acylamino, carb(alcoxy en $C_1$-$C_4$) ou sulfamyle; et X et $X^1$ sont chacun indépendamment un atome d'hydrogène, un groupe halogéno ou alkyle;

b) de 1 à 25, de préférence de 1 à 10, parties d'un ou plusieurs dialkyl- et dicycloalkyl-carbodiimides de formule

$$R^1\text{-N=C=NR}^2$$

et de 25 à 98, de préférence de 65 à 98, parties d'un solvant.

**2.** Procédé de stabilisation d'une isothiazolone de formule

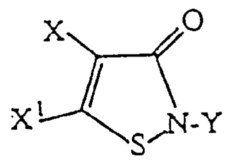

telle que définie dans la revendication 1, comprenant l'incorporation à cette dernière d'un ou plusieurs composés de formule $R^1$-N=C=N$R^2$, telle que définie dans la revendication 1, dans laquelle le rapport de l'isothiazolone au stabilisant est de 1 : 10 à 50 : 1.

**3.** Procédé ou composition selon l'une quelconque des revendications précédentes, dans lequel Y est un groupe alkyle en $C_1$-$C_{18}$; X est un atome d'hydrogène ou d'halogène, $X^1$ est un atome d'hydrogène ou d'halogène, et $R^1$ et $R^1$ sont des groupes alkyle ou cycloalkyle.

**4.** Procédé ou composition selon l'une quelconque des revendications précédentes, dans lequel l'isothiazolone comprend la 5-chloro-2-méthyl-3-isothiazolone, la 2-méthyl-3-isothiazolone, la 2-octyl-3-isothiazolone et/ou la 4,5-dichloro-2-octyl-3-isothiazolone.

**5.** Procédé ou composition selon l'une quelconque des revendications précédentes, dans lequel la quantité d'isothiazolone présente est de 14 parties, de préférence de 1,5 parties.

**6.** Procédé ou composition selon l'une quelconque des revendications précédentes, dans lequel le composé de formule $R^1$-N=C=N$R^2$ est le dicyclohexylcarbodiimide.

**7.** Procédé ou composition selon l'une quelconque des revendications précédentes, dans lequel le rapport du stabilisant à l'isothiazolone est de 1 : 7 à 2 : 1.

**8.** Procédé pour prévenir ou inhiber la croissance de bactéries, de champignons ou d'algues dans un lieu susceptible d'une contamination ou sujet à une contamination par ceux-ci, comprenant l'incorporation, sur ou dans le lieu, d'une quantité qui est efficace pour affecter de façon négative la croissance de bactéries, de champignons ou d'algues, d'une composition selon l'une quelconque des revendications 1 et 3 à 7.

**9.** Procédé selon la revendication 8, dans lequel le lieu est un milieu aqueux, une formulation d'huile de coupe, un système de refroidissement à l'eau, un film protecteur solide ou décoratif, un tissu, du cuir, du papier, du bois, de l'eau de lessive, une formulation cosmétique, un système de combustible, une matière plastique ou une émulsion.